# EUROPÄISCHE PATENTSCHRIFT

(11) **EP 4 012 350 B1**
(45) Veröffentlichungstag und Bekanntmachung des Hinweises auf die Patenterteilung: **15.03.2023**
(21) Anmeldenummer: 20212349.3
(22) Anmeldetag: 08.12.2020
(51) Int. Cl.: G01D 5/20

(54) **ABTASTELEMENT UND INDUKTIVE POSITIONSMESSEINRICHTUNG MIT DIESEM ABTASTELEMENT**
SCANNING ELEMENT AND INDUCTIVE POSITION MEASURING DEVICE WITH THE SAME
ÉLÉMENT DE DÉTECTION ET DISPOSITIF DE MESURE DE POSITION INDUCTIF POURVU DUDIT ÉLÉMENT DE DÉTECTION

(43) Veröffentlichungstag der Anmeldung: 15.06.2022
(73) Patentinhaber: Dr. Johannes Heidenhain GmbH, 83301 Traunreut (DE)
(72) Erfinder: HEINEMANN, Christoph, 83236 Übersee (DE); HEUMANN, Martin, 83278 Traunstein (DE); TIEMANN, Marc Oliver, 83329 Waging am See (DE)

(56) Entgegenhaltungen:
- EP-A1- 1 164 358
- WO-A2-2004/020936
- DE-B3-102016 202 859
- DE-T2-602004 006 168

## Beschreibung

### GEBIET DER TECHNIK

Die Erfindung betrifft ein Abtastelement für eine induktive Positionsmesseinrichtung gemäß dem Anspruch 1 zur Positionsbestimmung des Abtastelements relativ zu zwei mit unterschiedlicher Geschwindigkeit drehbaren Skalenelementen sowie eine Positionsmesseinrichtung mit einem derartigen Abtastelement.

Induktive Positionsmesseinrichtungen werden beispielsweise als Winkelmessgeräte zur Bestimmung der Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerspuren ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Insbesondere werden bei Antrieben von Robotern häufig induktive Positionsmesseinrichtungen als Messgeräte für die Bestimmung der Winkellage einer Antriebswelle und gleichzeitig für die exakte Bestimmung der Winkellage einer Abtriebswelle eingesetzt, wobei die Bewegung der Antriebswelle durch ein Untersetzungsgetriebe in die Abtriebswelle eingeleitet wird. In diesem Fall werden Winkelpositionen beziehungsweise Winkelstellungen mithilfe eines Abtastelements gemessen, welches eine Leiterplatte umfasst, die an beiden Seiten entsprechende Detektoreinheiten aufweist, so dass die jeweilige Winkelstellung von beidseitig der Leiterplatte drehbar angeordneten Skalenelementen bestimmt werden kann.

### STAND DER TECHNIK

In der JP 2006208239 A, insbesondere gemäß der dortigen Figur 6, ist eine Positionsmesseinrichtung mit zwei Rotoren, zwischen welchen ein Stator angeordnet ist, offenbart. Die dort beschriebene Positionsmesseinrichtung kommt beispielsweise in einer Mikrometerschraube zum Einsatz.

Aus der WO 2004/020936 A2 ist ein induktiver Positionssensor bekannt.

### ZUSAMMENFASSUNG DER ERFINDUNG

Der Erfindung liegt die Aufgabe zugrunde ein vergleichsweise genau arbeitendes, kompaktes und kostengünstig herstellbares Abtastelement für eine induktive Positionsmesseinrichtung zu schaffen, durch welches eine Bestimmung von Positionen beziehungsweise Winkelstellungen zweier Skalenelemente ermöglicht ist.

Diese Aufgabe wird erfindungsgemäß durch die Merkmale des Anspruches 1 gelöst.

Das Abtastelement, welches für eine induktive Positionsmesseinrichtung geeignet und bestimmt ist, umfasst eine mehrlagige Leiterplatte mit einer ersten Detektoreinheit und mit einer zweiten Detektoreinheit sowie elektronische Bauteile. Die erste Detektoreinheit weist eine erste Erregerspur und eine erste Empfängerspur auf und ist in einer ersten Lage und in einer zweiten Lage der Leiterplatte angeordnet. Die zweite Detektoreinheit weist eine zweite Erregerspur und eine zweite Empfängerspur auf und ist in einer dritten Lage und in einer vierten Lage der Leiterplatte angeordnet. Die Leiterplatte weist eine geometrische Mittenebene auf, welche zwischen den Detektoreinheiten zu liegen kommt, wobei die erste Empfängerspur und die zweite Empfängerspur in Umfangsrichtung um eine Achse umlaufend angeordnet sind. Die erste Empfängerspur umfasst erste Empfängerleiterbahnen und die zweite Empfängerspur umfasst zweite Empfängerleiterbahnen. Diese Empfängerleiterbahnen weisen jeweils einen periodischen Verlauf auf. Die erste Empfängerspur weist entlang ihrer Erstreckung in Umfangsrichtung eine erste Lücke auf, die in Umfangsrichtung durch die ersten Empfängerleiterbahnen begrenzt ist. Die zweite Empfängerspur weist entlang ihrer Erstreckung in Umfangsrichtung eine zweite Lücke auf, die in Umfangsrichtung durch die zweiten Empfängerleiterbahnen begrenzt ist. Die Leiterplatte weist eine Durchkontaktierung auf, welche sowohl innerhalb der ersten Lücke als auch innerhalb der zweiten Lücke angeordnet ist. Insbesondere ist demnach die Durchkontaktierung bezogen auf die Umfangsrichtung zwischen den ersten Empfängerleiterbahnen und den zweiten Empfängerleiterbahnen angeordnet.

Im Hinblick auf eine Festlegung der räumlichem Anordnung des Erfindungsgegenstandes kann zunächst eine erste Richtung x definiert werden. Die erste Richtung x stellt diejenige Richtung dar, in welcher die gesuchte Position gemessen wird (Messrichtung). Da durch die Positionsmesseinrichtung jeweils bezogen auf eine Dreh- oder Schwenkbewegung um eine (Dreh-) Achse eine erste relative Winkelstellung zwischen dem ersten Skalenelement und dem Abtastelement gemessen werden soll und zugleich eine zweite Winkelstellung zwischen dem zweiten Skalenelement und dem Abtastelement, ist die erste Richtung x eine Umfangsrichtung beziehungsweise eine Tangentialrichtung.

Zudem kann eine zweite Richtung y definiert werden, die orthogonal zur ersten Richtung x verläuft.

Orthogonal zur ersten Richtung x und gleichzeitig orthogonal zur zweiten Richtung y ist eine dritte Richtung z orientiert. Die dritte Richtung z verläuft parallel zur (Dreh-) Achse, um welche ein Skalenelement relativ zum Abtastelement drehbar ist. Zudem ist die dritte Richtung z orthogonal zur Mittenebene ausgerichtet. Die einzelnen Lagen der Leiterplatte sind in der dritten Richtung z zueinander versetzt angeordnet.

Insbesondere kann ein Ende, also eine Kontaktstelle der Durchkontaktierung innerhalb der ersten Lücke und das andere Ende beziehungsweise die andere Kontaktstelle innerhalb der zweiten Lücke angeordnet sein. Die Durchkontaktierung kann insbesondere in der dritten Richtung z verlaufen.

Üblicherweise sind die beiden größten Flächen einer Leiterplatte parallel zueinander orientiert. Die Mittenebene ist insbesondere in der Mitte zwischen diesen Leiterplattenflächen parallel zu den Flächen angeordnet, so dass insbesondere in der dritten Richtung z der Abstand zwischen einer Fläche der Leiterplatte zur Mittenebene genauso groß ist wie der Abstand zwischen der anderen Fläche der Leiterplatte zur Mittenebene.

In weiterer Ausgestaltung der Erfindung verlaufen die erste Erregerspur und die zweite Erregerspur entlang der Umfangsrichtung beziehungsweise entlang der ersten Richtung x.

Mit Vorteil verlaufen die erste Empfängerspur und die zweite Empfängerspur entlang der Umfangsrichtung beziehungsweise entlang der ersten Richtung x wie auch die erste Erregerspur und die zweite Erregerspur.

In vorteilhafter Weise ist das Abtastelement so ausgestaltet, dass die erste Erregerspur und die zweite Erregerspur elektrisch in Serie geschaltet sind.

Mit Vorteil sind die erste Erregerspur und die zweite Erregerspur mit einem Erregerstrom bestrombar, welcher üblicherweise eine zeitlich wechselnde Stromstärke aufweist (Wechselstrom oder Mischstrom). Der Erregerstrom ist mit Hilfe der elektronischen Bauteile generierbar, das heißt, dass dessen Verlauf von den elektronischen Bauteilen formbar ist. Nachdem ein physikalischer Zusammenhang zwischen der Stromstärke und der Spannungsstärke existiert, kann natürlich die gleiche Betrachtung auch für die Erregerspannung vorgenommen werden.

In weiterer Ausgestaltung der Erfindung sind diejenigen Signale, die von der ersten Empfängerspur und der zweiten Empfängerspur erzeugbar sind, mit Hilfe der elektronischen Bauteile, die insbesondere eine Auswerteschaltung bilden weiterverarbeitbar.

Die elektronischen Bauteile können also Elemente verschiedener elektronischer Schaltungen sein beziehungsweise unterschiedlichen Schaltungen zugeordnet sein. Beispielsweise können bestimmte elektronische Bauteile Elemente der Schaltung zur Generierung eines Erregerstroms sein oder weitere elektronische Bauteile können Elemente einer weiteren Schaltung zur Auswertung beziehungsweise Weiterverarbeitung von Signalen sein.

Mit Vorteil ist die Leiterplatte so ausgestaltet, dass die Durchkontaktierung die erste Detektoreinheit mit der dritten Lage oder mit der vierten Lage elektrisch verbindet. Alternativ kann die Durchkontaktierung die zweite Detektoreinheit mit der ersten Lage oder mit der zweiten Lage elektrisch verbinden. Insbesondere kann die Durchkontaktierung mit einer Leiterbahn, die sich entsprechend in der ersten, zweiten, dritten oder vierten Lage befindet, verbunden sein.

In weiterer Ausgestaltung der Erfindung ist die Durchkontaktierung in elektrischem Kontakt zu einem der elektronischen Bauteile, so dass also insbesondere Signale, die durch die erste Detektoreinheit oder durch die zweite Detektoreinheit beziehungsweise deren Empfängerleiterbahnen erzeugt werden, über die Durchkontaktierung dem elektronischen Bauteile zuführbar sind.

In vorteilhafter Ausgestaltung der Erfindung ist die Durchkontaktierung als ein through hole via ausgeführt. Insbesondere ist die Durchkontaktierung durch eine durchgängige Bohrung durch die Leiterplatte hindurch hergestellt. Bevorzugt wird die Bohrung innenwandig einer Metallschicht, insbesondere Kupferschicht, versehen. Die obere und untere Kontaktstelle der Durchkontaktierung bilden einen elektrischen Kontakt mit Leiterbahnen, Leiterschichten oder elektronischen Bauteilen. Unter dem Begriff Durchkontaktierung ist im Folgenden auch eine Anordnung zu verstehen, bei der mehrere Bohrungen oder Hohlräume, die mit leitfähigem Material gefüllt oder beschichtet sind, versetzt (insbesondere in radialer Richtung oder in Umfangsrichtung) zueinander angeordnet sind. Häufig werden derartige Durchkontaktierungen auch als Staggered Vias bezeichnet.

In weiterer Ausgestaltung der Erfindung erstreckt sich die erste Lücke in Umfangsrichtung über eine erste Länge, wobei die ersten Empfängerleiterbahnen einen periodischen Verlauf mit einer ersten Periodenlänge λ1 aufweisen. Dabei gilt, dass die erste Länge größer oder gleich 1/8 der ersten Periodenlänge λ1 ist, also L1 (erste Periodenlänge) ≥ 1/8·λ1.

Mit Vorteil ist das Abtastelement so ausgestaltet, dass sich die zweite Lücke in Umfangsrichtung über eine zweite Länge erstreckt und die zweiten Empfängerleiterbahnen einen periodischen Verlauf mit einer zweiten Periodenlänge λ2 aufweisen. In diesem Fall gilt, dass die zweite Länge größer oder gleich 1/8 der zweiten Periodenlänge λ2 ist, also L2 (zweite Periodenlänge) ≥ 1/8·λ2.

In weiterer Ausgestaltung der Erfindung weisen die ersten Empfängerleiterbahnen einen periodischen Verlauf mit einer ersten Periodenlänge λ1 auf und die zweiten Empfängerleiterbahnen einen periodischen Verlauf mit einer zweiten Periodenlänge λ2. Die zweite Periodenlänge λ2 ist größer oder gleich der ersten Periodenlänge λ1 (λ2 ≥ λ1).

In vorteilhafter Ausgestaltung der Erfindung sind die zweite Detektoreinheit und zumindest eines der elektronischen Bauteile auf derselben Seite der Leiterplatte angeordnet. Bei dieser Bauweise befinden sich also die zweite Detektoreinheit und das elektronische Bauteil in gleicher Richtung versetzt zur Mittenebene, so dass die Mittenebene nicht zwischen der zweiten Detektoreinheit und dem elektronischen Bauteil angeordnet ist.

Mit Vorteil weist die erste Detektoreinheit eine dritte Empfängerspur auf und die zweite Detektoreinheit eine vierte Empfängerspur. Insbesondere kann dann die dritte Empfängerspur dritte Empfängerleiterbahnen umfassen, wobei die dritten Empfängerleiterbahnen einen periodischen Verlauf aufweisen und die Periodenlänge der dritten Empfängerleiterbahnen kleiner ist als die erste Periodenlänge λ1 der ersten Empfängerleiterbahnen. Weiterhin kann die vierte Empfängerspur vierte Empfängerleiterbahnen umfassen, wobei die vierten Empfängerleiterbahnen einen periodischen Verlauf aufweisen und die Periodenlänge der vierten Empfängerleiterbahnen größer ist als die zweite Periodenlänge λ2 der zweiten Empfängerleiterbahnen.

In weiterer Ausgestaltung der Erfindung weist die erste Detektoreinheit eine dritte Erregerspur und die zweite Detektoreinheit eine vierte Erregerspur auf.

In vorteilhafter Ausgestaltung sind eine erste Abschirmschicht in einer fünften Lage und eine zweite Abschirmschicht in einer sechsten Lage der Leiterplatte angeordnet, wobei die Durchkontaktierung die erste Abschirmschicht und die zweite Abschirmschicht durchdringt, insbesondere ohne die Abschirmschichten elektrisch zu kontaktieren. Die Mittenebene liegt zwischen der ersten Abschirmschicht und der zweiten Abschirmschicht, so dass also die Abschirmschichten beidseits der Mittenebene angeordnet sind.

Die Mittenebene kommt bezogen auf die dritte Richtung z zwischen der ersten Detektoreinheit und der ersten Abschirmschicht zu liegen. Folglich gilt ebenso, dass die Mittenebene bezogen auf die dritte Richtung z zwischen der zweiten Detektoreinheit und der zweiten Abschirmschicht zu liegen kommt beziehungsweise gilt, dass die zweite Detektoreinheit und die zweite Abschirmschicht beidseits der Mittenebene angeordnet sind.

Gemäß einem weiteren Aspekt umfasst die Erfindung auch eine induktive Positionsmesseinrichtung mit dem Abtastelement sowie einem ersten Skalenelement und einem zweiten Skalenelement. Die Skalenelemente sind in der dritten Richtung z (orthogonal zur Mittenebene) beabstandet, beidseits der Leiterplatte angeordnet.

Mit Vorteil weist das erste Skalenelement einen ersten Durchmesser D1 auf und das zweite Skalenelement einen zweiten Durchmesser d2, wobei der erste Durchmesser D1 größer ist als der zweite Durchmesser d2 (D1 > d2).

Weiterhin können die Skalenelemente um eine gemeinsame Achse relativ zum Abtastelement drehbar angeordnet sein.

Zudem kann zumindest eines der elektronischen Bauteile von der Achse weiter beabstandet angeordnet sein als die Außenkontur des zweiten Skalenelements. Das zumindest eine elektronische Bauteil ist dann also radial außerhalb des zweiten Skalenelements angeordnet.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung eines Ausführungsbeispiels anhand der beiliegenden Figuren.

### KURZE BESCHREIBUNG DER ZEICHNUNGEN

- Figur 1: eine perspektivische Ansicht einer Positionsmesseinrichtung umfassend ein Abtastelement und ein erstes Skalenelement sowie ein zweites Skalenelement,
- Figur 2: eine Draufsicht auf eine erste Seite des Abtastelements,
- Figur 3: eine Detailansicht auf die erste Seite des Abtastelements,
- Figur 4: eine Draufsicht auf eine zweite Seite des Abtastelements
- Figur 5: eine Detailansicht auf die zweite Seite des Abtastelements,
- Figur 6: ein Detailschnitt P - P durch das Abtastelement,
- Figur 7: ein Detailschnitt durch das Abtastelement im Bereich einer Durchkontaktierung,
- Figur 8: eine Draufsicht auf ein erstes Skalenelement,
- Figur 9: eine Draufsicht auf ein zweites Skalenelement.

### BESCHREIBUNG DER AUSFÜHRUNGSFORMEN

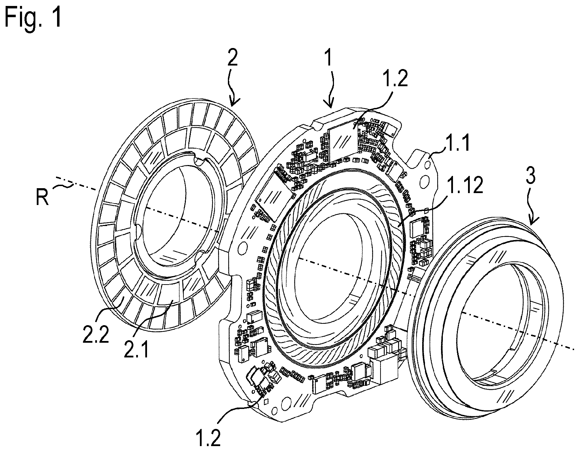

Die Erfindung wird gemäß der Figur 1 anhand einer Positionsmesseinrichtung beschrieben, welche ein Abtastelement 1 aufweist, das sowohl zur Erfassung einer Winkelstellung eines ersten Skalenelements 2 als auch einer Winkelstellung eines zweiten Skalenelements 3 verwendet werden kann. Beide Skalenelemente 2, 3 sind um eine Achse R relativ zum Abtastelement 1 drehbar angeordnet. Eine derartige Positionsmesseinrichtung kann beispielsweise in einer Antriebseinrichtung eines Roboters verwendet werden. Das zweite Skalenelement 3 ist dann etwa mit einer Antriebswelle eines Motors drehfest verbunden. Diese ist wiederum mit einem Untersetzungsgetriebe verbunden, welches eine Abtriebswelle aufweist. Mit dieser Abtriebswelle dreht sich das erste Skalenelement 2. Auf diese Weise kann beispielsweise eine Winkelstellung zur Kommutierung des Motors mit Hilfe des zweiten Skalenelements 3 und eine vergleichsweise hochgenaue Winkelstellung zur Positionierung des Roboters mit Hilfe des ersten Skalenelements 2 durchgeführt werden.

Das Abtastelement 1 umfasst eine Leiterplatte 1.1, welche mehrere Lagen aufweist, sowie elektronische Bauteile 1.2, die auf der Leiterplatte 1.1 montiert sind. Das Abtastelement 1 dient zur Abtastung des ersten Skalenelements 2 und gleichzeitig zur Abtastung des zweiten Skalenelements 3. Im vorgestellten Ausführungsbeispiel sind elektronische Bauteile 1.2 nur auf der zweiten Seite montiert. Alternativ oder ergänzend könnte aber auch die erste Seite der Leiterplatte 1.1 mit elektronischen Bauteilen bestückt werden.

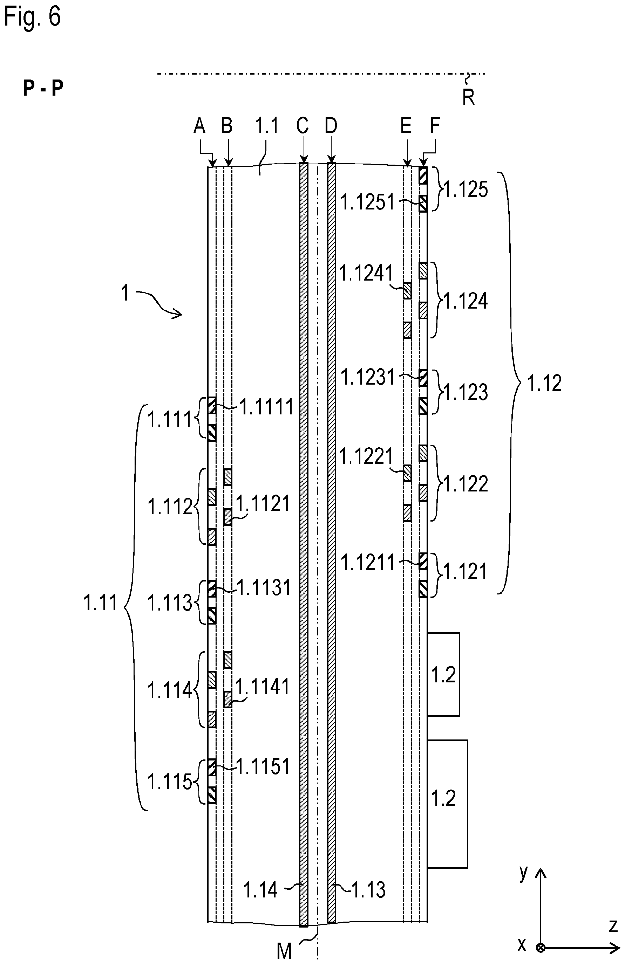

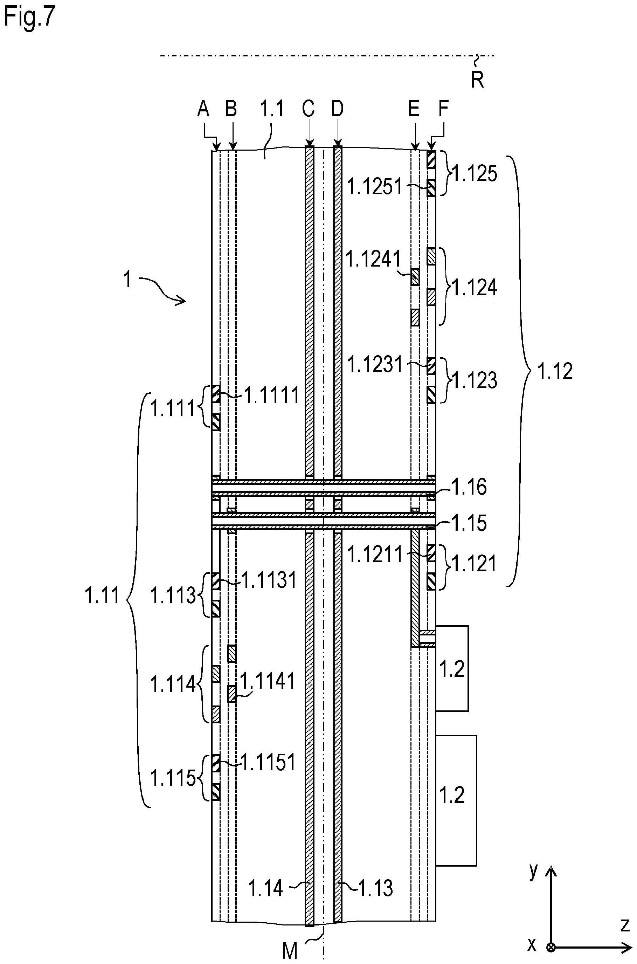

Zur Bestimmung der Winkelinformationen sind auf einer ersten Seite der Leiterplatte 1.1 eine erste Detektoreinheit 1.11 und auf einer zweiten Seite der Leiterplatte 1.1 eine zweite Detektoreinheit 1.12 angeordnet. In der Figur 1 sind nur diejenigen Strukturen der zweiten Detektoreinheit 1.12 zu sehen, die sich auf einer äußeren vierten Lage F (siehe die Figuren 6 und 7) befinden.

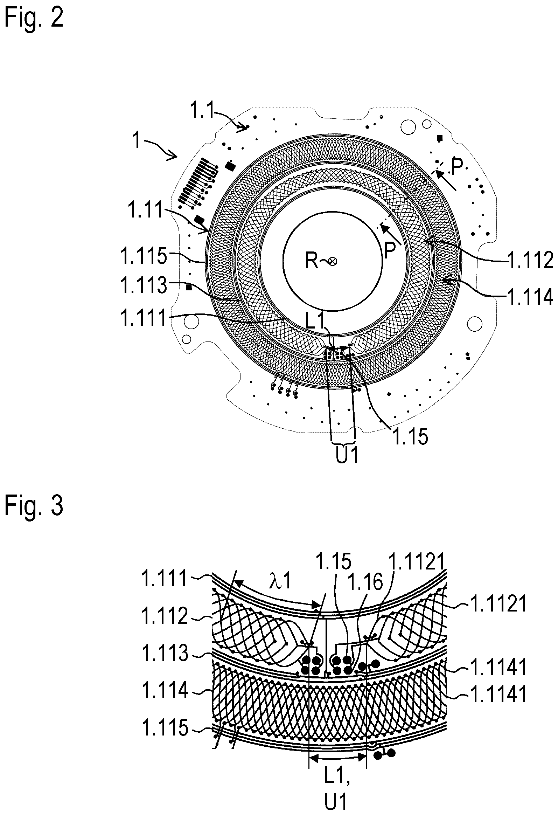

In den Figuren 2 und 3 (die Figur 3 ist eine vergrößerte Detailansicht der ersten Detektoreinheit 1.11 gemäß der Figur 2) sind unter anderem diejenigen Strukturen der ersten Detektoreinheit 1.11 gezeigt, die sich in einer äußeren ersten Lage A der Leiterplatte 1.1 und in einer zweiten Lage B der Leiterplatte 1.1 befinden. Die erste Detektoreinheit 1.11 umfasst eine erste Erregerspur 1.111, eine erste Empfängerspur 1.112, eine dritte Erregerspur 1.113, eine dritte Empfängerspur 1.114 und eine fünfte Erregerspur 1.115. Die erste Empfängerspur 1.112 umfasst erste Empfängerleiterbahnen 1.1121.

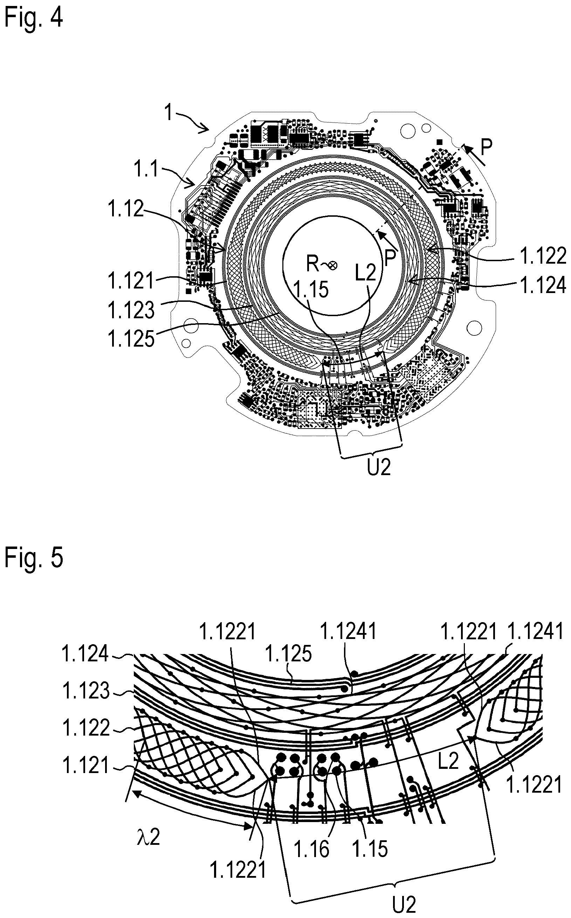

In den Figuren 4 und 5 ist die Leiterplatte 1.1 von der anderen Seite gezeigt, so dass die zweite Detektoreinheit 1.12 sichtbar ist. Die Figur 5 zeigt ein Detail der zweiten Detektoreinheit 1.12 in Vergrößerung. In den Figuren 4 und 5 sind unter anderem diejenigen Strukturen der zweiten Detektoreinheit 1.12 gezeigt, die sich in der äußeren vierten Lage F der Leiterplatte 1.1 und in einer dritten Lage E der Leiterplatte 1.1 befinden. Die zweite Detektoreinheit 1.12 umfasst eine zweite Erregerspur 1.121, eine zweite Empfängerspur 1.122, eine vierte Erregerspur 1.123, eine vierte Empfängerspur 1.124 und eine sechste Erregerspur 1.125. Die zweite Empfängerspur 1.122 umfasst zweite Empfängerleiterbahnen 1.1221.

In der Figur 6 ist eine schematische Teilschnittdarstellung gemäß der Schnittlinie P-P durch das Abtastelement 1 beziehungsweise der Leiterplatte 1.1 gezeigt, wobei der Übersichtlichkeit halber auf eine Schraffur von elektrisch isolierendem Material der Leiterplatte 1.1 verzichtet wurde. Zudem ist die Teilschnittdarstellung der Figur 6 zur besseren Erläuterbarkeit des erfindungsgemäßen Abtastelements 1 nicht maßstabsgetreu ausgeführt. Die Leiterplatte 1.1 ist, wie oben bereits erwähnt, mehrlagig aufgebaut. Geometrisch betrachtet kann für die Leiterplatte 1.1 eine so genannte Mittenebene M definiert werden, die parallel zur ersten Seite beziehungsweise parallel zur zweiten Seite der Leiterplatte 1.1 mittig zwischen der ersten und zweiten Seite angeordnet ist. Zudem können die geometrischen Beziehungen der einzelnen Elemente zueinander mit Hilfe eines Koordinatensystems definiert werden. Dabei ist eine erste Richtung x diejenige Richtung, entlang welcher bestimmungsgemäß eine Positions- beziehungsweise Winkelmessung erfolgen soll. Im vorgestellten Ausführungsbeispiel entspricht die erste Richtung x der Umfangsrichtung. Die Achse R, um welche die Skalenelemente 2, 3 drehbar sind, verläuft parallel zu einer dritten Richtung z, die dritte Richtung z kann demnach hier auch als axiale Richtung definiert werden. Orthogonal zur dritten Richtung z und zur ersten Richtung x ist eine zweite Richtung y orientiert, die auch als radiale Richtung bezeichnet werden kann. Somit ist eine Ebene, die von der x- und y-Achse aufgespannt wird, parallel zur Mittenebene M orientiert und die dritte Richtung z sowie die Achse R verlaufen orthogonal zur Mittenebene M.

In der ersten Lage A der Leiterplatte 1.1 und in der zweiten Lage B der Leiterplatte 1.1 ist die erste Detektoreinheit 1.11 angeordnet, während in der dritten Lage E und in der vierten Lage F die zweite Detektoreinheit 1.12 angeordnet ist. Die erste Lage A ist der ersten Seite der Leiterplatte 1.1 am nächsten gelegen und die zweite Lage B ist der ersten Seite der Leiterplatte 1.1 am zweitnächsten gelegen. Gleiches gilt für die vierte Lage F und die dritte Lage E bezüglich der zweiten Seite der Leiterplatte 1.1.

Die Erregerspuren 1.111, 1.113, 1.115 der ersten Detektoreinheit 1.11 umfassen Erregerleiterbahnen 1.1111, 1.1131, 1.1151, die in der ersten Lage A verlaufen. Analog hierzu umfassen die Erregerspuren 1.121, 1.123, 1.125 der zweiten Detektoreinheit 1.12 Erregerleiterbahnen 1.1211, 1.1231, 1.1251 die in der vierten Lage F verlaufen.

Zudem umfasst die Leiterplatte 1.1 auch eine fünfte Lage D und eine sechste Lage C. In der fünften Lage D befindet sich eine erste Abschirmschicht 1.13 und in der sechsten Lage C eine zweite Abschirmschicht 1.14. Die Abschirmschichten 1.13, 1.14 sind hier vergleichsweise großflächige Kupferschichten.

Die Erregerspuren 1.111, 1.113, 1.115 der ersten Detektoreinheit 1.11 umschließen die erste Empfängerspur 1.112 beziehungsweise die dritte Empfängerspur 1.114.

Die Erregerspuren 1.121, 1.123, 1.125 der zweiten Detektoreinheit 1.12 umschließen die zweite Empfängerspur 1.122 beziehungsweise die vierte Empfängerspur 1.124. Sowohl die Erregerspuren 1.111, 1.113, 1.115, 1.121, 1.123, 1.125 als auch die Empfängerspuren 1.112, 1.114, 1.122, 1.124 verlaufen entlang der Umfangsrichtung beziehungsweise entlang der ersten Richtung x.

Jede der Empfängerspuren 1.112, 1.114, 1.122, 1.124 umfasst im vorgestellten Ausführungsbeispiel jeweils Empfängerleiterbahnen 1.1121, 1.1141, 1.1221, 1.1241, die in Umfangsrichtung versetzt angeordnet sind, so dass diese dem Versatz entsprechend vier phasenverschobene Signale liefern können. In den Figuren sind diejenigen Empfängerleiterbahnen 1.1121, 1.1141, 1.1221, 1.1241, welche ein und derselben Empfängerspur 1.112, 1.114, 1.122, 1.124 angehören, mit nur einem Bezugszeichen versehen. Folglich sind also beispielsweise alle Empfängerleiterbahnen 1.1121 der ersten Empfängerspur 1.112 mit nur einem Bezugszeichen versehen. Zudem verlaufen die ersten Empfängerleiterbahnen 1.1121 der ersten Detektoreinheit 1.11 mit Vias verbunden in unterschiedlichen Lagen der Leiterplatte 1.1, so dass an Kreuzungspunkten unerwünschte Kurzschlüsse vermieden werden. Das Gleiche gilt auch für die Empfängerleiterbahnen 1.1221, 1.1241 der zweiten Detektoreinheit 1.12. Wenngleich genau genommen jede der ersten und zweiten Empfängerleiterbahnen 1.1121, 1.1221 aus vielen Leiterstücken, die jeweils auf zwei Ebenen beziehungsweise Lagen verteilt und aneinandergereiht sind, wird im Folgenden eine derartige Struktur zusammenfassend als eine Empfängerleiterbahn 1.1221, 1.1241 bezeichnet.

Die Empfängerleiterbahnen 1.1121, 1.1141, 1.1221, 1.1241 weisen einen räumlich periodischen Verlauf auf, der im Wesentlichen sinusförmig beziehungsweise sinusartig ausgestaltet ist. Die Empfängerleiterbahnen 1.1121 der ersten Empfängerspur 1.112 weisen eine Periodenlänge λ1 (Figur 3) auf, während die Empfängerleiterbahnen 1.1221 der zweiten Empfängerspur 1.122 eine Periodenlänge λ2 (Figur 5) aufweisen. Im vorgestellten Ausführungsbeispiel sind innerhalb einer Empfängerspur 1.112, 1.114, 1.122, 1.124 benachbarte Empfängerleiterbahnen 1.1121, 1.1141, 1.1221, 1.1241 um 1/8 der vollen Sinusperiode (um π/4 oder 45° entlang der Umfangsrichtung oder ersten Richtung x) zueinander versetzt angeordnet. Die Empfängerleiterbahnen 1.1121, 1.1141, 1.1221, 1.1241 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden.

Im vorgestellten Ausführungsbeispiel ist die zweite Periodenlänge λ2 größer als die erste Periodenlänge λ1.

Wie in den Figuren 2 und 3 gezeigt, weist die erste Empfängerspur 1.112 entlang ihrer Erstreckung in Umfangsrichtung (x-Richtung) eine erste Lücke U1 auf. Der Bereich der ersten Lücke U1 wird durch die ersten Empfängerleiterbahnen 1.1121 begrenzt, so dass sich also zwischen den begrenzenden Empfängerleiterbahnen 1.1121 keine Detektorstruktur befindet. In erster Näherung ist also die erste Lücke U1 ein Bereich, der geometrisch betrachtet ein Ringsektor ist. Der minimale Abstand L1 in Umfangsrichtung zwischen zwei ersten Empfängerleiterbahnen 1.1121 im Bereich der ersten Lücke U1 beträgt im vorgestellten Ausführungsbeispiel 5/8·λ1 (U1 = 5/8·λ1). Im Bereich der ersten Lücke U1 sind also keine periodisch verlaufenden ersten Empfängerleiterbahnen 1.1121 angeordnet.

Gemäß den Figuren 4 und 5 weist die die zweite Empfängerspur 1.122 entlang ihrer Erstreckung in Umfangsrichtung eine zweite Lücke U2 auf. Diese zweite Lücke U2 wird durch die zweiten Empfängerleiterbahnen 1.1221 begrenzt. Der minimale Abstand L2 in Umfangsrichtung zwischen zwei zweiten Empfängerleiterbahnen 1.1221 im Bereich der zweiten Lücke U2 beträgt im vorgestellten Ausführungsbeispiel 13/8 (U1 = 13/8·λ1). In der zweiten Lücke U2 sind also keine periodisch verlaufenden zweiten Empfängerleiterbahnen 1.1221 angeordnet.

Zudem weist die Leiterplatte 1.1 Durchkontaktierungen 1.15, 1.16 auf. In der Figur 7 ist eine schematische Teilschnittdarstellung durch das Abtastelement 1 beziehungsweise der Leiterplatte 1.1 im Bereich der Durchkontaktierung 1.15, 1.16 gezeigt. Die Durchkontaktierungen 1.15, 1.16 sind hier als ein through hole via ausgeführt und durchdringen demnach die Leiterplatte 1.1 über deren komplette Dicke. Somit verlaufen die Durchkontaktierungen 1.15, 1.16 parallel zur dritten Richtung z. Die Leiterplatte 1.1 ist demnach so ausgestaltet, dass die Durchkontaktierungen 1.15, 1.16 sowohl innerhalb der ersten Lücke U1 als auch innerhalb der zweiten Lücke U2 angeordnet sind.

Mit Hilfe der Durchkontaktierung 1.15, werden erste Empfängerleiterbahnen 1.1121 der ersten Empfängerspur 1.112 mit einem elektronischen Bauteil 1.2, das jenseits der Mittenebene M angeordnet ist, elektrisch verbunden. Zu diesem Zweck wird durch eine Leiterbahn, die in der zweiten Lage B verläuft, mit einer in der Figur 7 nicht sichtbaren ersten Empfängerleiterbahn 1.1121 ein elektrischer Kontakt zur Durchkontaktierung 1.15 hergestellt. Die Durchkontaktierung 1.15 durchdringt die erste Abschirmschicht 1.13 und die zweite Abschirmschicht 1.14, wobei die Abschirmschichten 1.13, 1.14 so strukturiert sind, dass diese nicht elektrisch mit der Durchkontaktierung 1.15 verbunden sind. In der dritten Lage E ist nun ein Kontakt zu einer in dieser Lage E verlaufenden Leiterbahn hergestellt. Diese Leiterbahn ist mit einem weiteren Via, hier ein blind via beziehungsweise micro via, elektrisch verbunden, durch das letztlich der Kontakt zum elektronischen Bauteil 1.2 hergestellt wird.

Die weitere Durchkontaktierung 1.16 verbindet die ersten Empfängerleiterbahnen 1.1121, die in der ersten Lage A verlaufen mit der vierten Lage F. Über Leiterbahnen, die in den Figuren nicht sichtbar sind, wird ein elektrischer Kontakt zum elektronischen Bauteil 1.2 hergestellt.

Die erste Empfängerspur 1.112 ist in der zweiten Richtung y überlappend in Bezug auf die zweite Empfängerspur 1.122 angeordnet.

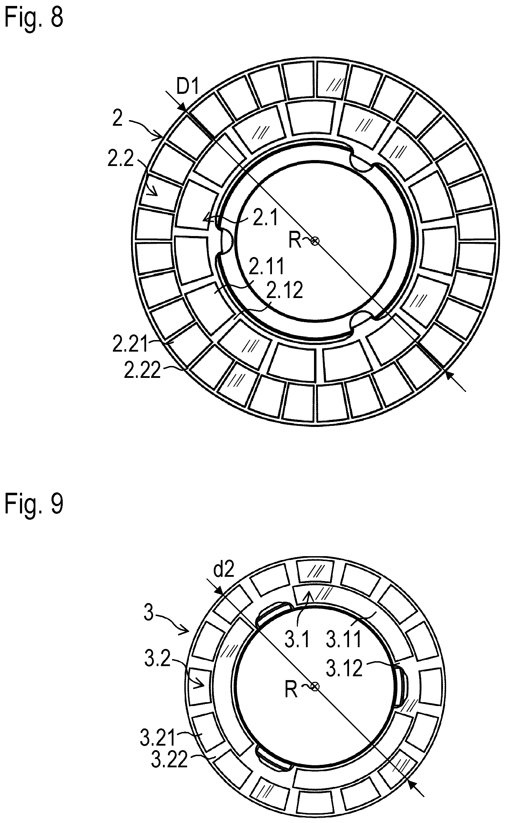

In der Figur 8 ist das erste Skalenelement 2 in einer Draufsicht gezeigt. Das zweite Skalenelement 3 ist in der Figur 9 ebenfalls in einer Draufsicht dargestellt. Die Skalenelemente 2, 3 weisen eine scheibenförmige Gestalt auf, wobei das erste Skalenelement 2 einen ersten Durchmesser D1 aufweist und das zweite Skalenelement 3 einen zweiten Durchmesser d2. Der erste Durchmesser D1 ist größer als der zweite Durchmesser d2 (D1 > d2).

Die Skalenelemente 2, 3 bestehen jeweils aus einem Substrat, welches im dargestellten Ausführungsbeispiel aus Epoxydharz hergestellt ist und auf denen jeweils zwei Teilungsspuren 2.1, 2.2; 3.1, 3.2 angeordnet sind. Die Teilungsspuren 2.1, 2.2; 3.1, 3.2 sind ringförmig ausgebildet und bezüglich der Achse R konzentrisch mit unterschiedlichem Durchmesser auf dem Substrat angeordnet. Die Teilungsspuren 2.1, 2.2; 3.1, 3.2 umfassen Teilungsstrukturen bestehend aus jeweils einer periodischen Abfolge von alternierend angeordneten elektrisch leitfähigen Teilungsbereichen 2.11, 2.21; 3.11, 3.21 und nichtleitfähigen Teilungsbereichen 2.12, 2.22; 3.12, 3.22. Als Material für die elektrisch leitfähigen Teilbereiche 2.11, 2.21; 3.11, 3.21 wurde im gezeigten Beispiel Kupfer auf das Substrat aufgebracht. In den nichtleitfähigen Teilungsbereichen 2.12, 2.22; 3.12, 3.22 wurde das Substrat dagegen nicht beschichtet. Durch die Anordnung mit jeweils zwei Teilungsspuren 2.1, 2.2; 3.1, 3.2 können die Winkelstellungen der Skalenelemente 2, 3 jeweils absolut bestimmt werden. Die äußerste Teilungsspur 2.2 des ersten Skalenelements 2 weist die größte Anzahl von Teilungsbereichen 2.21, 2.22 entlang einer Umfangslinie auf, so dass durch diese die größte Auflösung bezüglich der Messung der Winkelstellung erzielbar ist.

Im zusammengebauten Zustand gemäß der Figur 1 stehen sich das Abtastelement 1 und die Skalenelemente 2, 3 jeweils mit axialem Abstand beziehungsweise Luftspalt gegenüber, so dass bei einer Relativdrehung zwischen den Skalenelementen 2, 3 und dem Abtastelement 1 in den Empfängerleiterbahnen 1.1121, 1.1141, 1.1221, 1.1241 jeweils ein von der jeweiligen Winkelposition abhängiges Signal durch Induktionseffekte erzeugbar ist. Voraussetzung für die Bildung von entsprechenden Signalen ist, dass die Erregerleiterbahnen 1.1111, 1.1131, 1.1151, 1.1211, 1.1231, 1.1251 ein zeitlich wechselndes elektromagnetisches Erregerfeld im Bereich der jeweilig abgetasteten Teilungsstrukturen erzeugen. Im dargestellten Ausführungsbeispiel sind die Erregerleiterbahnen 1.1111,1.1131, 1.1151,1.1211,1.1231,1.1251 als mehrere planar-parallele stromdurchflossene Einzel-Leiterbahnen ausgebildet. Das Abtastelement 1 weist eine elektronische Schaltung mit den elektronischen Bauteilen 1.2 auf, die über die Lagen E und F miteinander elektrisch verbunden sind. Die elektronische Schaltung kann beispielsweise auch einen ASIC-Baustein umfassen. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerleiterbahnen 1.1111, 1.1131, 1.1151, 1.1211, 1.1231, 1.1251 fließt. Somit werden die Erregerleiterbahnen 1.1111, 1.1131, 1.1151, 1.1211, 1.1231, 1.1251 durch ein und dasselbe Erregerkontrollelement bestromt. Dabei sind die erste Erregerspur 1.111 und die zweite Erregerspur 1.121 elektrisch in Serie geschaltet.

Werden die Erregerspuren 1.111, 1.113, 1.115, 1.121, 1.123, 1.125 bestromt, so bildet sich um die Erregerleiterbahnen 1.1111, 1.1131, 1.1151, 1.1211, 1.1231, 1.1251 ein schlauch- bzw. zylinderförmig orientiertes elektromagnetisches Feld aus. Die Feldlinien des resultierenden elektromagnetischen Feldes verlaufen um die Erregerspuren 1.111, 1.113, 1.115, 1.121, 1.123, 1.125, wobei die Richtung der Feldlinien in bekannter Art und Weise von der Stromrichtung in den Erregerleiterbahnen 1.1111, 1.1131, 1.1151, 1.1211, 1.1231, 1.1251 abhängt. Im Bereich der leitfähigen Teilbereiche 2.11, 2.21; 3.11, 3.21 werden Wirbelströme induziert, so dass jeweils eine von der Winkelstellung abhängige Modulation des Feldes erreicht wird. Entsprechend kann durch die Empfängerspuren 1.112, 1.114, 1.122, 1.124 jeweils die relative Winkelstellung gemessen werden. Die Paare von Empfängerleiterbahnen 1.1121, 1.1141, 1.1221, 1.1241 sind innerhalb ihrer Empfängerspur 1.112, 1.114, 1.122, 1.124 so angeordnet, dass diese jeweils um 90° phasenversetzte Signale liefern, so dass auch eine Bestimmung der Drehrichtung vorgenommen werden kann. Die Signale, die von den Empfängerspuren 1.112, 1.114, 1.122, 1.124 erzeugt werden, werden mit Hilfe von einigen der elektronischen Bauteile 1.2, die eine Auswerteschaltung bilden, weiterverarbeitet.

Durch die erste Abschirmschicht 1.13 und die zweite Abschirmschicht 1.14 kann eine negative Beeinflussung der beiden Detektoreinheiten 1.11, 1.12 im Hinblick auf die Messgenauigkeit weitgehend verhindert werden. Insbesondere wird ein unzulässig hohes Maß an Übersprechsignalen verhindert aber gleichzeitig eine allzu große Dämpfung der Erregerfelder vermieden. Zudem wird die elektromagnetische Störung der Detektoreinheiten 1.11, 1.12 durch die elektronischen Bauteile 1.2 oder aus externen Quellen unterbunden.

## Patentansprüche

1. Abtastelement (1) für eine induktive Positionsmesseinrichtung, das eine mehrlagige Leiterplatte (1.1) und elektronische Bauteile (1.2) umfasst, wobei die Leiterplatte (1.1)
- eine erste Detektoreinheit (1.11) umfasst, die eine erste Erregerspur (1.111) und eine erste Empfängerspur (1.112) aufweist und die erste Detektoreinheit (1.11) in einer ersten Lage (A) und in einer zweiten Lage (B) der Leiterplatte (1.1) angeordnet ist,
- eine zweite Detektoreinheit (1.12) umfasst, die eine zweite Erregerspur (1.121) und eine zweite Empfängerspur (1.122) aufweist und die zweite Detektoreinheit (1.12) in einer dritten Lage (E) und in einer vierten Lage (F) der Leiterplatte (1.1) angeordnet ist, wobei
die Leiterplatte (1.1) eine geometrische Mittenebene (M) aufweist, welche zwischen den Detektoreinheiten (1.11, 1.12) zu liegen kommt, wobei
die Empfängerspuren (1.112, 1.122) um eine Achse (R) in Umfangsrichtung umlaufend angeordnet sind und
die erste Empfängerspur (1.112) erste Empfängerleiterbahnen (1.1121) und die zweite Empfängerspur (1.122) zweite Empfängerleiterbahnen (1.1221) umfasst, wobei die ersten Empfängerleiterbahnen (1.1121) und die zweiten Empfängerleiterbahnen (1.1221) jeweils einen periodischen Verlauf aufweisen, wobei die erste Empfängerspur (1.112) entlang ihrer Erstreckung in Umfangsrichtung eine erste Lücke (U1) aufweist, die durch die ersten Empfängerleiterbahnen (1.1121) begrenzt ist und
die zweite Empfängerspur (1.122) entlang ihrer Erstreckung in Umfangsrichtung eine zweite Lücke (U2) aufweist, die durch die zweiten Empfängerleiterbahnen (1.1221) begrenzt ist und
die Leiterplatte (1.1) eine Durchkontaktierung (1.15) aufweist, welche sowohl innerhalb der ersten Lücke (U1) als auch innerhalb der zweiten Lücke (U2) angeordnet ist.

2. Abtastelement (1) gemäß dem Anspruch 1, wobei die Durchkontaktierung (1.15)
die erste Detektoreinheit (1.11) mit der dritten Lage (E) oder der vierten Lage (F) elektrisch verbindet oder
die zweite Detektoreinheit (1.12) mit der ersten Lage (A) oder der zweiten Lage (B) elektrisch verbindet.

3. Abtastelement (1) gemäß einem der vorhergehenden Ansprüche, wobei die Durchkontaktierung (1.15) in elektrischem Kontakt zu einem der elektronischen Bauteile (1.2) ist.

4. Abtastelement (1) gemäß einem der vorhergehenden Ansprüche, wobei die Durchkontaktierung (1.15) als ein through hole via ausgeführt ist.

5. Abtastelement (1) gemäß einem der vorhergehenden Ansprüche, wobei sich die erste Lücke (U1) in Umfangsrichtung über eine erste Länge (L1) erstreckt und die ersten Empfängerleiterbahnen (1.1121) einen periodischen Verlauf mit einer ersten Periodenlänge (λ1) aufweisen, wobei gilt: L1 ≥ 1/8λ·1.

6. Abtastelement (1) gemäß einem der vorhergehenden Ansprüche, wobei sich die zweite Lücke (U2) in Umfangsrichtung über eine zweite Länge (L2) erstreckt und die zweiten Empfängerleiterbahnen (1.1221) einen periodischen Verlauf mit einer zweiten Periodenlänge (λ2) aufweisen, wobei gilt: L2 ≥ 1/8·λ2.

7. Abtastelement (1) gemäß einem der vorhergehenden Ansprüche, wobei die ersten Empfängerleiterbahnen (1.1121) einen periodischen Verlauf mit einer ersten Periodenlänge (λ1) aufweisen und die zweiten Empfängerleiterbahnen (1.1121) einen periodischen Verlauf mit einer zweiten Periodenlänge (λ2) aufweisen, wobei die zweite Periodenlänge (λ2) größer oder gleich der ersten Periodenlänge (λ1) ist.

8. Abtastelement (1) gemäß einem der vorhergehenden Ansprüche, wobei die zweite Detektoreinheit (1.12) und zumindest eines der elektronischen Bauteile (1.2) auf derselben Seite der Leiterplatte (1.1) angeordnet sind.

9. Abtastelement (1) gemäß einem der vorhergehenden Ansprüche, wobei die erste Detektoreinheit (1.11) eine dritte Empfängerspur (1.114) aufweist und die zweite Detektoreinheit (1.12) eine vierte Empfängerspur (1.124).

10. Abtastelement (1) gemäß dem Anspruch 9, wobei die dritte Empfängerspur (1.114) dritte Empfängerleiterbahnen (1.1141) umfasst, die einen periodischen Verlauf aufweisen, wobei die Periodenlänge der dritten Empfängerleiterbahnen (1.1141) kleiner ist als die erste Periodenlänge (λ1) der ersten Empfängerleiterbahnen (1.1121).

11. Abtastelement (1) gemäß dem Anspruch 9 oder 10, wobei die vierte Empfängerspur (1.124) vierte Empfängerleiterbahnen (1.1241) umfasst, die einen periodischen Verlauf aufweisen, wobei die Periodenlänge der vierten Empfängerleiterbahnen (1.1241) größer ist als die zweite Periodenlänge (λ2) der zweiten Empfängerleiterbahnen (1.1221).

12. Abtastelement (1) gemäß einem der vorhergehenden Ansprüche, wobei die erste Detektoreinheit (1.11) eine dritte Erregerspur (1.113) und die zweite Detektoreinheit (1.12) eine vierte Erregerspur (1.123) aufweist.

13. Abtastelement (1) gemäß einem der vorhergehenden Ansprüche, wobei eine erste Abschirmschicht (1.13) in einer fünften Lage (D) und eine zweite Abschirmschicht (1.14) in einer sechsten Lage (C) angeordnet sind und die Durchkontaktierung (1.15) die Abschirmschichten (1.13, 1.14) durchdringt.

14. Induktive Positionsmesseinrichtung umfassend ein Abtastelement (1) gemäß einem der vorhergehenden Ansprüche sowie einem ersten Skalenelement (2) und einem zweiten Skalenelement (3), wobei die Skalenelemente (2, 3) in einer dritten Richtung (z), die orthogonal zur Mittenebene orientiert ist, beabstandet beidseits der Leiterplatte (1.11) angeordnet sind.

15. Induktive Positionsmesseinrichtung gemäß dem Anspruch 14, wobei das erste Skalenelement (2) einen ersten Durchmesser (D1) aufweist und das zweite Skalenelement (3) einen zweiten Durchmesser (d2) aufweist und der erste Durchmesser (D1) größer ist als der zweite Durchmesser (d2).

## Claims

1. Scanning element (1) for an inductive position measurement device, comprising a multilayer circuit board (1.1) and electronic components (1.2), wherein the circuit board (1.1)
- comprises a first detector unit (1.11), which has a first exciter track (1.111) and a first receiver track (1.112), and the first detector unit (1.11) is arranged in a first layer (A) and in a second layer (B) of the circuit board (1.1),
- comprises a second detector unit (1.12), which has a second exciter track (1.121) and a second receiver track (1.122), and the second detector unit (1.12) is arranged in a third layer (E) and in a fourth layer (F) of the circuit board (1.1), wherein
the circuit board (1.1) has a geometric middle plane (M) which comes to rest between the detector units (1.11, 1.12), wherein
the receiver tracks (1.112, 1.122) are arranged rotatably about an axis (R) in the circumferential direction and the first receiver track (1.112) comprises first receiver conductor tracks (1.1121) and the second receiver track (1.122) comprises second receiver conductor tracks (1.1221), wherein the first receiver conductor tracks (1.1121) and the second receiver conductor tracks (1.1221) each have a periodic profile, wherein
the first receiver track (1.112) has a first gap (U1) along its extent in the circumferential direction, which first gap is delimited by the first receiver conductor tracks (1.1121) and
the second receiver track (1.122) has a second gap (U2) along its extent in the circumferential direction, which second gap is delimited by the second receiver conductor tracks (1.1221) and
the circuit board (1.1) has a plated through-hole (1.15) that is arranged both within the first gap (U1) and within the second gap (U2).

2. Scanning element (1) according to Claim 1, wherein the plated through-hole (1.15)
electrically connects the first detector unit (1.11) to the third layer (E) or the fourth layer (F) or
electrically connects the second detector unit (1.12) to the first layer (A) or the second layer (B).

3. Scanning element (1) according to either of the preceding claims, wherein the plated through-hole (1.15) is in electrical contact with one of the electronic components (1.2).

4. Scanning element (1) according to one of the preceding claims, wherein the plated through-hole (1.15) is embodied as a through-hole via.

5. Scanning element (1) according to one of the preceding claims, wherein the first gap (U1) extends over a first length (L1) in the circumferential direction and the first receiver conductor tracks (1.1121) have a periodic profile with a first period length (λ1), wherein it holds true that: L1 ≥ 1/8· λ1.

6. Scanning element (1) according to one of the preceding claims, wherein the second gap (U2) extends over a second length (L2) in the circumferential direction and the second receiver conductor tracks (1.1221) have a periodic profile with a second period length (λ2), wherein it holds true that: L2 ≥ 1/8· λ2.

7. Scanning element (1) according to one of the preceding claims, wherein the first receiver conductor tracks (1.1121) have a periodic profile with a first period length (λ1) and the second receiver conductor tracks (1.1121) have a periodic profile with a second period length (λ2), wherein the second period length (λ2) is greater than or equal to the first period length (λ1).

8. Scanning element (1) according to one of the preceding claims, wherein the second detector unit (1.12) and at least one of the electronic components (1.2) are arranged on the same side of the circuit board (1.1).

9. Scanning element (1) according to one of the preceding claims, wherein the first detector unit (1.11) has a third receiver track (1.114) and the second detector unit (1.12) has a fourth receiver track (1.124).

10. Scanning element (1) according to Claim 9, wherein the third receiver track (1.114) comprises third receiver conductor tracks (1.1141) that have a periodic profile, wherein the period length of the third receiver conductor tracks (1.1141) is less than the first period length (λ1) of the first receiver conductor tracks (1.1121).

11. Scanning element (1) according to Claim 9 or 10, wherein the fourth receiver track (1.124) comprises fourth receiver conductor tracks (1.1241) that have a periodic profile, wherein the period length of the fourth receiver conductor tracks (1.1241) is greater than the second period length (λ2) of the second receiver conductor tracks (1.1221).

12. Scanning element (1) according to one of the preceding claims, wherein the first detector unit (1.11) has a third exciter track (1.113) and the second detector unit (1.12) has a fourth exciter track (1.123).

13. Scanning element (1) according to one of the preceding claims, wherein a first shielding layer (1.13) is arranged in a fifth layer (D) and a second shielding layer (1.14) is arranged in a sixth layer (C) and the plated through-hole (1.15) penetrates the shielding layers (1.13, 1.14).

14. Inductive position measurement device comprising a scanning element (1) according to one of the preceding claims and a first scale element (2) and a second scale element (3), wherein the scale elements (2, 3) are arranged in a manner spaced on either side of the circuit board (1.11) in a third direction (z) oriented orthogonally to the middle plane.

15. Inductive position measurement device according to Claim 14, wherein the first scale element (2) has a first diameter (D1) and the second scale element (3) has a second diameter (d2) and the first diameter (D1) is greater than the second diameter (d2).

## Revendications

1. Elément de balayage (1) pour un dispositif de mesure de position inductif, comprenant une carte de circuits imprimés multicouche (1.1) et des composants électroniques (1.2), dans lequel la carte de circuits imprimés (1.1) comprend
- une première unité de détection (1.11) qui présente un premier tracé d'excitation (1.111) et un premier tracé de réception (1.112), et la première unité de détection (1.11) est disposée dans une première couche (A) et dans une deuxième couche (B) de la carte de circuits imprimés (1.1),
- une deuxième unité de détection (1.12) qui présente un deuxième tracé d'excitation (1.121) et un deuxième tracé de réception (1.122), et la deuxième unité de détection (1.12) est disposée dans une troisième couche (E) et dans une quatrième couche (F) de la carte de circuits imprimés (1.1), dans lequel
la carte de circuits imprimés (1.1) présente un plan médian géométrique (M) qui se situe entre les unités de détecteur (1.11, 1.12), dans lequel les tracés de réception (1.112, 1.122) sont disposés en tournant autour d'un axe (R) dans la direction circonférentielle, et
le premier tracé de réception (1.112) comprend des premières pistes conductrices de réception (1.1121) et le deuxième tracé de réception (1.122) comprend des deuxièmes pistes conductrices de réception (1.1221), les premières pistes conductrices de réception (1.1121) et les deuxièmes pistes conductrices de réception (1.1221) présentant respectivement une allure périodique, dans lequel
le premier tracé de réception (1.112) présente le long de son extension dans la direction circonférentielle un premier intervalle (U1) qui est limité par les premières pistes conductrices de réception (1.1121), et
le deuxième tracé de réception (1.122) présente le long de son extension dans la direction circonférentielle un deuxième intervalle (U2) qui est limité par les deuxièmes pistes conductrices de réception (1.1221), et
la carte de circuits imprimés (1.1) présente une métallisation de trou (1.15) qui est disposée à la fois à l'intérieur du premier intervalle (U1) et à l'intérieur du deuxième intervalle (U2).

2. Elément de balayage (1) selon la revendication 1, dans lequel la métallisation de trou (1.15)
relie électriquement la première unité de détection (1.11) à la troisième couche (E) ou à la quatrième couche (F), ou
relie électriquement la deuxième unité de détection (1.12) à la première couche (A) ou à la deuxième couche (B).

3. Elément de balayage (1) selon l'une quelconque des revendications précédentes, dans lequel la métallisation de trou (1.15) est en contact électrique avec l'un des composants électroniques (1.2).

4. Elément de balayage (1) selon l'une quelconque des revendications précédentes, dans lequel la métallisation de trou (1.15) est réalisée sous forme de via traversant.

5. Elément de balayage (1) selon l'une quelconque des revendications précédentes, dans lequel le premier intervalle (U1) s'étend dans la direction circonférentielle sur une première longueur (L1), et les premières pistes conductrices de réception (1.1121) présentent une allure périodique d'une première longueur de période (λ1), où : L1 ≥ 1/8·λ1.

6. Elément de balayage (1) selon l'une quelconque des revendications précédentes, dans lequel le deuxième intervalle (U2) s'étend dans la direction circonférentielle sur une deuxième longueur (L2), et les deuxièmes pistes conductrices de réception (1.1221) présentent une allure périodique d'une deuxième longueur de période (λ2), où : L2 ≥ 1/8·λ2.

7. Elément de balayage (1) selon l'une quelconque des revendications précédentes, dans lequel les premières pistes conductrices de réception (1.1121) présentent une allure périodique d'une première longueur de période (λ1), et les deuxièmes pistes conductrices de réception (1.1121) présentent une allure périodique d'une deuxième longueur de période (λ2), dans lequel la deuxième longueur de période (λ2) est supérieure ou égale à la première longueur de période (λ1).

8. Elément de balayage (1) selon l'une quelconque des revendications précédentes, dans lequel la deuxième unité de détection (1.12) et au moins l'un des composants électroniques (1.2) sont disposés du même côté de la carte de circuits imprimés (1.1).

9. Elément de balayage (1) selon l'une quelconque des revendications précédentes, dans lequel la première unité de détection (1.11) présente un troisième tracé de réception (1.114), et la deuxième unité de détection (1.12) présente un quatrième tracé de réception (1.124) .

10. Elément de balayage (1) selon la revendication 9, dans lequel le troisième tracé de réception (1.114) comprend des troisièmes pistes conductrices de réception (1.1141) qui présentent une allure périodique, la longueur de période des troisièmes pistes conductrices de réception (1.1141) étant inférieure à la première longueur de période (λ1) des premières pistes conductrices de réception (1.1121).

11. Elément de balayage (1) selon la revendication 9 ou 10, dans lequel le quatrième tracé de réception (1.124) comprend des quatrièmes pistes conductrices de réception (1.1241) qui présentent une allure périodique, la longueur de période des quatrièmes pistes conductrices de réception (1.1241) étant supérieure à la deuxième longueur de période (λ2) des deuxièmes pistes conductrices de réception (1.1221).

12. Elément de balayage (1) selon l'une quelconque des revendications précédentes, dans lequel la première unité de détection (1.11) présente un troisième tracé d'excitation (1.113), et la deuxième unité de détection (1.12) présente un quatrième tracé d'excitation (1.123) .

13. Elément de balayage (1) selon l'une quelconque des revendications précédentes, dans lequel une première couche de blindage (1.13) est disposée dans une cinquième couche (D), et une deuxième couche de blindage (1.14) est disposée dans une sixième couche (C), et la métallisation de trou (1.15) traverse les couches de blindage (1.13, 1.14).

14. Dispositif de mesure de position inductif, comprenant un élément de balayage (1) selon l'une quelconque des revendications précédentes ainsi qu'un premier élément gradué (2) et un deuxième élément gradué (3), dans lequel les éléments gradués (2, 3) sont disposés dans une troisième direction (z), qui est orientée de manière orthogonale par rapport au plan médian, à distance des deux côtés de la carte de circuits imprimés (1.11).

15. Dispositif de mesure de position inductif selon la revendication 14, dans lequel le premier élément gradué (2) présente un premier diamètre (D1), et le deuxième élément gradué (3) présente un deuxième diamètre (d2), et le premier diamètre (D1) est supérieur au deuxième diamètre (d2).
